# EUROPEAN PATENT APPLICATION

(11) **EP 4 372 152 A1**
(43) Date of publication of application: **22.05.2024**
(21) Application number: 23210051.1
(22) Date of filing: 15.11.2023
(51) Int. Cl.: E02F 3/36, E02F 9/12, F15B 15/00, F16H 57/04

(54) **ROTARY DRIVE SYSTEM**

(30) Priority: 21.11.2022 JP 2022185643
(71) Applicant: Nachi-Fujikoshi Corp., Tokyo 105-0021 (JP)
(72) Inventor: TAKEDA, Yuta, Toyama-shi, 930-8511 (JP); YOKOTA, Takaya, Toyama-shi, 930-8511 (JP); SHINOZUKA, Masato, Toyama-shi, 930-8511 (JP)
(74) Representative: Horn Kleimann Waitzhofer Schmid-Dreyer Patent- und Rechtsanwälte PartG mbB

(57) **Abstract**

Provided is a rotary drive system that can supply operating oil for releasing a brake and lubricating oil for a reducer from a single hydraulic pressure source, and can keep the lubricating oil clean. A rotary drive system 100 is characterized by including: a motor 102; a reducer 104 configured to reduce the speed of rotation of the motor; a brake 106 configured to stop rotation of the reducer during an off state of the motor; a brake-releasing pressurized oil passage 108 through which operating oil is suppliable from an external hydraulic pressure source 112 to the brake to release the brake when the motor is operated; and a throttle 110 that is in communication with the brake-releasing pressurized oil passage and the reducer, and through which the operating oil is suppliable as lubricating oil to the reducer.

## Description

### FIELD OF THE INVENTION

The present invention relates to a rotary drive system provided with a reducer-equipped motor.

### BACKGROUND OF THE INVENTION

Construction machines such as, by way of example, hydraulic shovels use a rotary drive system provided with a reducer-equipped electric motor (see Patent Document 1, for example). Patent Document 1 discloses a hydraulic shovel including a rotary drive system that rotates an upper rotating body relative to a lower travel body.

This rotary drive system is provided with an electric motor, a reducer that reduces the speed of rotation of the electric motor, a hydraulic pump, and a lubricating oil pump. The hydraulic pump supplies pressurized oil (operating oil) for releasing a brake when the electric motor is operated. The lubricating oil pump supplies lubricating oil for maintaining the coolness and lubricity of the electric motor to the inside of the electric motor.

### PRIOR ART DOCUMENT

### PATENT DOCUMENT

Patent Document 1: JP 2019-154101 A

### SUMMARY OF THE INVENTION

### PROBLEMS TO BE SOLVED BY THE INVENTION

However, since the rotary drive system of Patent Document 1 includes two hydraulic pressure sources, namely, the lubricating oil pump that supplies lubricating oil to the reducer and the hydraulic pump that discharges pressurized oil for releasing the brake, two oil passage systems are required.

Also, in the rotary drive system of Patent Document 1, lubricating oil stored in an accumulator provided inside the reducer is also used to cool the electric motor. The lubricating oil continues to circulate within the device, and thus it is necessary to change the lubricating oil on a regular basis to keep the lubricating oil clean. However, in, for example, a relatively small hydraulic shovel called a mini shovel, the rotary drive system is arranged below the driver's seat installed in the cab of the upper rotating body. Therefore, in the mini shovel, a floor frame provided in the cab needs to be removed when changing the lubricating oil of the rotary drive system, which takes time and effort.

In view of the foregoing problem, it is an object of the present invention to provide a rotary drive system that can supply operating oil for releasing a brake and lubricating oil for a reducer from a single hydraulic pressure source, and can keep the lubricating oil clean.

### MEANS TO SOLVE THE PROBLEM

In order to solve the foregoing problem, a representative configuration of a rotary drive system according to the present invention is characterized by including: a motor; a reducer configured to reduce the speed of rotation of the motor; a brake configured to stop rotation of the reducer during an off state of the motor; a brake-releasing pressurized oil passage through which operating oil is suppliable from an external hydraulic pressure source to the brake to release the brake when the motor is operated; and a throttle that is in communication with the brake-releasing pressurized oil passage and the reducer, and through which the operating oil is suppliable as lubricating oil to the reducer.

In the foregoing configuration, the operating oil for releasing the brake when the motor is operated is supplied from the external hydraulic pressure source to the brake through the brake-releasing pressurized oil passage. Also, the throttle is in communication with the brake-releasing pressurized oil passage and the reducer. Accordingly, the operating oil from the external hydraulic pressure source is not only supplied to the brake via the brake-releasing pressurized oil passage when the motor is operated, but also supplied, as lubricating oil, to the inner space of the reducer casing via the throttle (in a state in which the pressure of the oil is lowered).

Therefore, in the foregoing configuration, it is possible to supply the operating oil for releasing the brake and the lubricating oil for the reducer from the single hydraulic pressure source. Also, since the lubricating oil is continuously supplied to the reducer from the brake-releasing pressurized oil passage, the lubricating oil will (necessarily) be discharged to the outside, instead of internally circulating. Therefore, it is possible to keep the lubricating oil clean, without causing any trouble of having to change lubricating oil (that is internally circulating).

### EFFECTS OF THE INVENTION

According to the present invention, it is possible to provide a rotary drive system that can supply operating oil for releasing a brake and lubricating oil for a reducer from a single hydraulic pressure source, and can keep the lubricating oil clean.

### BRIEF EXPLANATION OF THE DRAWINGS

FIG. 1 is a diagram illustrating an overall configuration of a rotary drive system according to an embodiment of the present invention.
FIG. 2 is a diagram illustrating details of the rotary drive system shown in FIG. 1.
FIG. 3 is an enlarged view illustrating a main portion of the rotary drive system shown in FIG. 2.

### EMBODIMENTS OF THE INVENTION

Referring to the accompanying drawings, the following is a detailed explanation of preferred embodiments of the present invention. All dimensions, materials and further specific numbers shown in the embodiments are merely given as examples in order to aid the understanding of the invention, and are not meant to limit the present invention, unless this is explicitly stated so. It should be further noted that throughout this specification and in the drawings, elements that have substantially the same functionality and/or structure are denoted by the same reference numerals and are not described redundantly. Furthermore, elements that are not directly related to the present invention may not necessarily be shown in the figures.

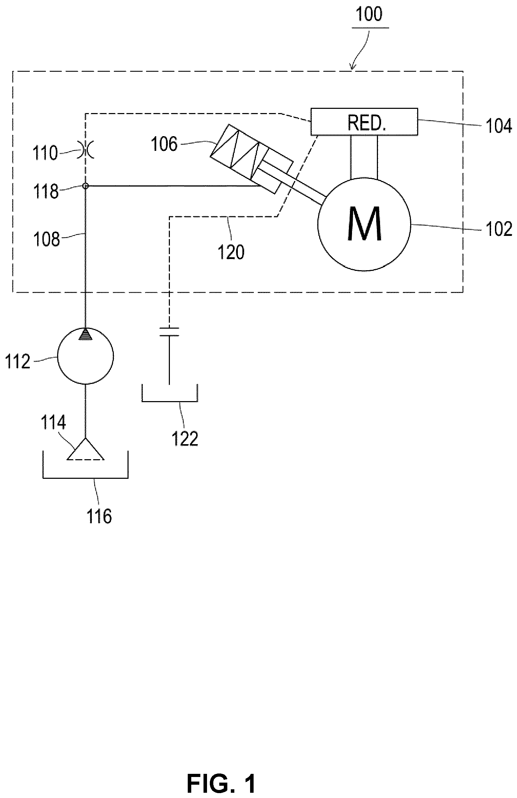

FIG. 1 is a diagram illustrating an overall configuration of a rotary drive system 100 according to an embodiment of the present invention. The rotary drive system 100 is a system for use in, for example, construction machines such as hydraulic shovels, and includes a motor 102, a reducer 104 for reducing the speed of rotation of the motor 102, a brake 106, a brake-releasing pressurized oil passage 108, and a throttle 110. Note that the motor 102 is, for example, a hydraulic motor or another power source, and a hydraulic pressure or another type of existing motive force may be used as driving force of the motor 102.

The brake 106 stops the rotation of the reducer 104 during an off state of the motor 102 to prevent unintended rotation of the motor 102. The brake-releasing pressurized oil passage 108 is connected to an external hydraulic pressure source 112. The hydraulic pressure source 112 sucks operating oil from an operating oil tank 116 via a strainer 114, and supplies the sucked oil to the brake-releasing pressurized oil passage 108. Also, when the motor 102 is operated, the operating oil for releasing the brake 106 is supplied from the hydraulic pressure source 112 to the brake 106 through the brake-releasing pressurized oil passage 108.

The throttle 110 is an oil passage that is thinner than the brake-releasing pressurized oil passage 108. The throttle 110 is provided in a branch that branches from the brake-releasing pressurized oil passage 108 at a branch point 118 midway in the brake-releasing pressurized oil passage 108, and is in communication with the reducer 104. The operating oil supplied from the hydraulic pressure source 112 to the brake-releasing pressurized oil passage 108 is also supplied, as lubricating oil, to the reducer 104 through the throttle 110.

That is to say, the operating oil from the external hydraulic pressure source 112 is not only supplied to the brake 106 via the brake-releasing pressurized oil passage 108 when the motor 102 is operated, but also supplied to the reducer 104 as lubricating oil in a state in which the pressure of the oil is lowered by the throttle 110. Also, the lubricating oil supplied to the reducer 104 is discharged to a drain pan 122 through a discharge port 120.

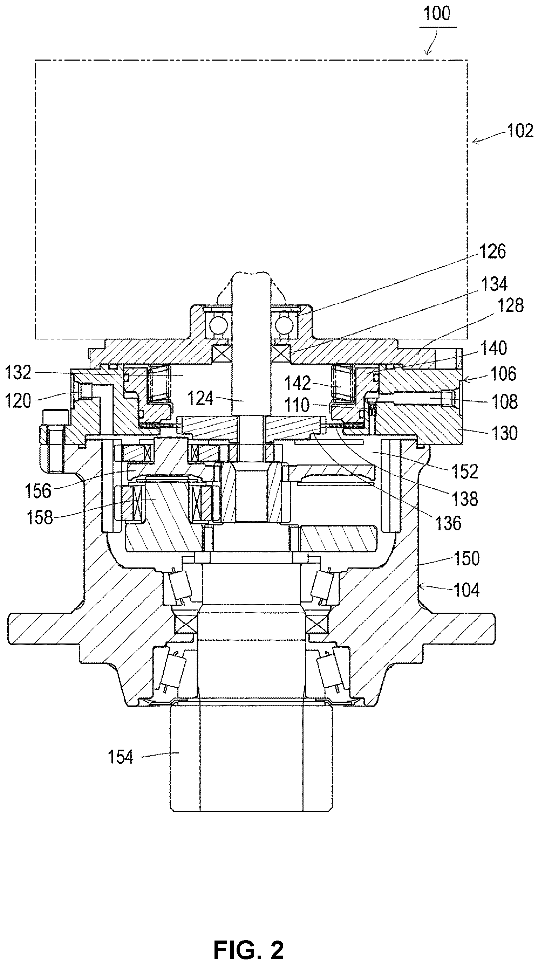

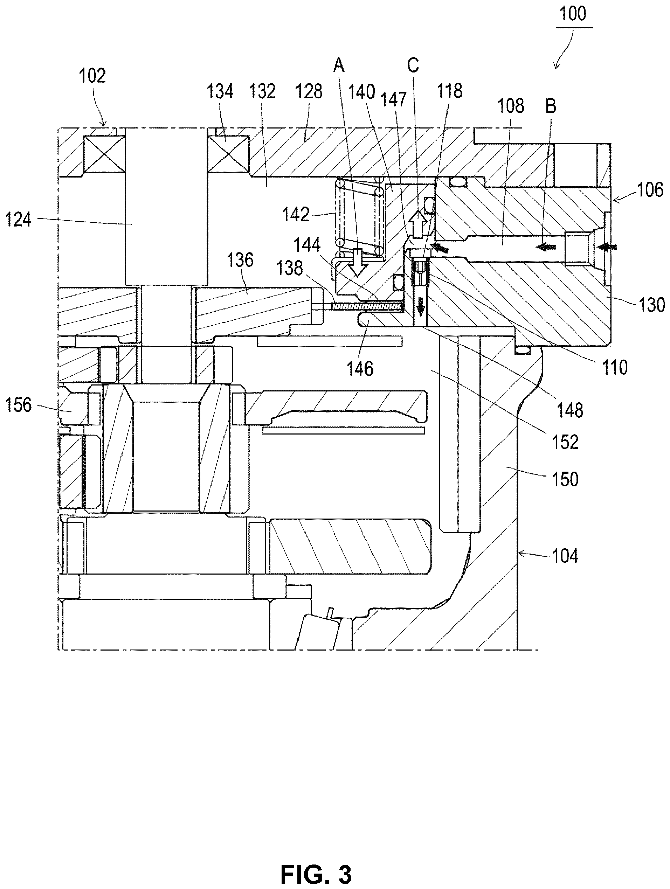

FIG. 2 is a diagram illustrating details of the rotary drive system 100 shown in FIG. 1. FIG. 3 is an enlarged view illustrating a main portion of the rotary drive system 100 shown in FIG. 2. As shown in FIG. 2, in the rotary drive system 100, the motor 102, the reducer 104, and the brake 106 are formed in one piece in a manner such that the brake 106 is arranged between the motor 102 and the reducer 104.

The motor 102 includes a shaft 124. The shaft 124 is passed through a flange 128 while being supported by a bearing 126, and further extends into a brake chamber 132 inside a brake casing 130 of the brake 106. Also, a space between the shaft 124 and the flange 128 is sealed by an oil seal 134.

The brake 106 includes a disk support unit 136, a brake disk 138, a brake piston 140, and a brake spring 142, and these parts are disposed in the brake chamber 132 inside the brake casing 130. The disk support unit 136 is a cylindrical member and is fitted to the shaft 124 of the motor 102. The brake disk 138 is an annular member and is fitted to the disk support unit 136.

As shown in FIG. 3, the brake spring 142 is disposed between the flange 128 of the motor 102 and the brake piston 140. The brake piston 140 is biased toward the brake disk 138 by a biasing force of the brake spring 142 indicated by the arrow A, and an abutment surface 144 of the brake piston 140 that abuts against the brake disk 138 functions as a brake shoe.

When the abutment surface 144 of the brake piston 140 is pressed against the brake disk 138, the brake disk 138 comes into contact with an opposing surface 146 of the brake casing 130, and cannot rotate due to a frictional force with the brake casing 130. In this way, the brake 106 enters a braked state in which the disk support unit 136 cannot rotate, thereby making it possible to prevent the shaft 124 from rotating during the off state of the motor 102.

Also, the brake casing 130 includes, as shown in FIG. 3, the brake-releasing pressurized oil passage 108, the throttle 110 provided in a branch that branches from the brake-releasing pressurized oil passage 108 at the branch point 118, and the discharge port 120 (see FIG. 2). By way of example, the throttle 110 is provided in a branch that branches from a compression chamber 147, and a discharge port 148 of the throttle 110 is in communication with an inner space 152 of a reducer casing 150 of the reducer 104. As shown in FIG. 3, the compression chamber 147 is a space that is located at a terminal end of the brake-releasing pressurized oil passage 108, and in which the pressure of the operating oil acts on the brake piston 140. Note that the throttle 110 is provided in the branch that branches from the compression chamber 147 but the present invention is not limited to this, and a configuration is also possible in which the throttle 110 is provided in a branch branching off from an appropriate position on the way to the terminal end of the brake-releasing pressurized oil passage 108 and is in communication with the inner space 152 of the reducer casing 150.

Therefore, upon being supplied from the external hydraulic pressure source 112 to the brake 106 when the motor 102 is operated, the operating oil passes through the brake-releasing pressurized oil passage 108 as indicated by the arrow B in FIG. 3 and reaches the brake piston 140 of the brake chamber 132. Then, the operating oil generates a force with the oil pressure for separating the brake piston 140 from the brake disk 138 indicated by the arrow C in FIG. 3, against the biasing force of the brake spring 142 indicated by the arrow A. When the brake piston 140 is separated from the brake disk 138 by the force generated with the hydraulic pressure of the operating oil, the brake 106 is in a brake-released state in which the disk support unit 136 is rotatable.

Furthermore, the operating oil not only reaches the brake piston 140 to generate the force with the hydraulic pressure indicated by the arrow C, but also is supplied as lubricating oil to the inner space 152 of the reducer casing 150 of the reducer 104 from the discharge port 148 in a state in which the pressure of the oil is lowered by the throttle 110. In other words, although the supply of the operating oil to the reducer 104 may be regarded as a leakage from the viewpoint of the brake 106, the pressure of the operating oil to be applied to the brake piston 140 can be kept high because of the interposed throttle 110. Accordingly, the rotary drive system 100 can supply operating oil for releasing the brake 106 and lubricating oil for the reducer 104 from the single hydraulic pressure source 112.

As shown in FIG. 2, the reducer 104 includes an output shaft 154, and a first-stage planetary gear mechanism 156 and a second-stage planetary gear mechanism 158 that are disposed in the inner space 152 of the reducer casing 150. The reducer 104 reduces the speed of rotation (output) of the shaft 124 of the motor 102, using the first-stage planetary gear mechanism 156 and the second-stage planetary gear mechanism 158, and outputs the resultant rotation from the output shaft 154. In the reducer 104, as a result of the operating oil from the external hydraulic pressure source 112 being supplied as lubricating oil to the inner space 152 of the reducer casing 150 via the throttle 110, the lubricities of both mechanisms are maintained.

Also, since the lubricating oil is continuously supplied to the reducer 104 from the brake-releasing pressurized oil passage 108 as indicated by the arrow B in FIG. 3, the lubricating oil will necessarily be discharged to the outside, instead of internally circulating. Here, as shown in FIG. 2, by providing, in the brake casing 130, the discharge port 120 that is in communication with the inner space 152 of the reducer casing 150, the lubricating oil supplied to the reducer 104 is discharged to the outside. Therefore, the rotary drive system 100 can keep the lubricating oil clean, without causing any trouble of having to change the lubricating oil.

Although preferred embodiments of the present invention have been described above with reference to the accompanying drawings, the present invention is needless to say not limited to these examples. A person skilled in the art will appreciate that various modifications and alterations can be made within the scope of the claims, and that all such modifications and alterations are also naturally encompassed in the technical scope of the present invention.

### INDUSTRIAL APPLICABILITY

The present invention is applicable to a rotary drive system provided with a reducer-equipped motor.

### INDEX TO THE REFERENCE NUMERALS

100 ... Rotary drive system, 102 ... Motor, 104 ... Reducer, 106 ... Brake, 108 ... Brake-releasing pressurized oil passage, 110 ... Throttle, 112 ... Hydraulic pressure source, 114 ... Strainer, 116 ... Operating oil tank, 118 ... Branch point, 120 ... Discharge port, 122 ... Drain pan, 124 ... Shaft, 126 ... Bearing, 128 ... Flange, 130 ... Brake casing, 132 ... Brake chamber, 134 ... Oil seal, 136 ... Disk support unit, 138 ... Brake disk, 140 ... Brake piston, 142 ... Brake spring, 144 ... Abutment surface of brake piston, 146 ... Opposing surface of brake casing, 148 ... Discharge port of throttle, 150 ... Reducer casing, 152 ... Inner space of reducer casing, 154 ... Output shaft, 156 ... First-stage planetary gear mechanism, 158 ... Second-stage planetary gear mechanism

## Claims

1. A rotary drive system (100) **characterized by** comprising:
a motor (102);
a reducer (104) configured to reduce the speed of rotation of the motor (102);
a brake (106) configured to stop rotation of the reducer (104) during an off state of the motor (102);
a brake-releasing pressurized oil passage (108) through which operating oil is suppliable from an external hydraulic pressure source (112) to the brake (106) to release the brake (106) when the motor (102) is operated; and
a throttle (110) that is in communication with the brake-releasing pressurized oil passage (108) and the reducer (104), and through which the operating oil is suppliable as lubricating oil to the reducer (104).
